Europäisches Patentamt

European Patent Office

Office européen des brevets

(19)

(11) Veröffentlichungsnummer: **0 069 955**
**B1**

(12)    **EUROPÄISCHE PATENTSCHRIFT**

(45) Veröffentlichungstag der Patentschrift:
02.05.85

(51) Int. Cl.⁴: **G 11 B 5/70**

(21) Anmeldenummer: **82105967.2**

(22) Anmeldetag: **05.07.82**

(54) **Magnetisches Speichermedium.**

(30) Priorität: **15.07.81 DE 3127884**

(43) Veröffentlichungstag der Anmeldung:
**19.01.83 Patentblatt 83/3**

(45) Bekanntmachung des Hinweises auf die Patenterteilung:
**02.05.85 Patentblatt 85/18**

(84) Benannte Vertragsstaaten:
**DE FR GB IT NL**

(56) Entgegenhaltungen:
**DE - A - 1 571 128**
**DE - A - 1 906 548**
**DE - B - 1 130 612**

(73) Patentinhaber: **AGFA-GEVAERT Aktiengesellschaft,
D-5090 Leverkusen 1 (DE)**

(72) Erfinder: **Kohler, Robert, Dr., Im Burgstall 12,
D-7123 Sachsenheim 2 (DE)**
Erfinder: **Nippe, Burkhard, Dr., Krennerweg 20,
D-8000 München 71 (DE)**
Erfinder: **Kober, Heinrich, Dr., Georgstrasse 12,
D-8021 Hohenschäftlarn (DE)**
Erfinder: **Schilffarth, Karlchristian, Dr.,
Schubertstrasse 3, D-8021 Sauerlach (DE)**
Erfinder: **Meckel, Walter, Dr., Zonser Strasse 9,
D-4004 Neuss (DE)**
Erfinder: **Quiring, Bernd, Dr.,
Albrecht-Haushofer-Strasse 2, D-5090 Leverkusen (DE)**

## Beschreibung

Die Erfindung betrifft ein magnetisches Speichermedium, bestehend aus einem unmagnetischen Schichtträger und einer darauf aufgebauten Magnetschicht, die als Bindemittel mindestens ein Polyurethan enthält.

Die gegenwärtigen Anstrengungen zur Verbesserung der magnetischen Aufzeichnungsmedien zielen vor allem auf die Erhöhung der Speicherdichte. Die dazu notwendigen Magnetmaterialien mit hoher Sättigungsmagnetisierung und hoher remanenter Magnetisierung enthalten z.B. Co-dotierte Eisenoxide, Magnetite oder Metallpulver. Es ist vor allem wichtig, das Magnetpigment in den Aufzeichnungsschichten möglichst dicht zu packen. Die ideale Aufzeichnungsschicht sollte zu 100% aus magnetischem Material bestehen. Obzwar die Bemühungen, solche Speichermedien z.B. durch Aufdampfen oder Plattieren zum Teil bereits erfolgreich sind, enthält doch z.Zt. die Masse der erzeugten Speicherschichten teilchenförmige magnetische Pigmente in einer Bindemittel-Matrix. Das Streben geht dahin, erhöhte Packungsdichte durch Verringerung des Bindemittelanteils und verbessertes Signal-Rausch-Verhältnis durch den Einsatz immer feinteiligerer Pigmente mit ausgeprägter Acicularität zu erreichen. In beiden Fällen wird jedoch die mechanische Stabilität der Schichten immer kritischer.

Die für den Einsatz notwendigen Eigenschaften, vor allem Abriebfestigkeit und Gleitfähigkeit, können nur durch Verwendung von Bindemitteln oder Bindemittel-Kombinationen mit ausgezeichnetem mechanischen Verhalten erreicht werden. Wesentlich ist, dass die Bindemittel auch bei hohen Pigmentierungen noch starke Haftkräfte auf die Pigmentoberfläche ausüben.

Es ist bekannt, dass Magnetschichten, die starken mechanischen Beanspruchungen unterworfen werden, als Bindemittel vorteilhafterweise Polyurethanelastomere enthalten. Besonders bewährt haben sich Polyesterurethane, wie sie in der DE-AS 1 106 959, oder Polyetherurethane, wie sie in der US-Patentschrift 2 899 411 beschrieben sind. Jedoch weisen diese Polyurethane als alleinige Bindemittel oft Nachteile auf. In vielen Fällen wird die Pigmentbenetzung und -dispergierung ungünstig beeinflusst, so dass eventuelle Versinterungen beim Mahlprozess nur ungenügend verteilt werden oder eine Agglomeration der Pigmentteilchen nicht ausreichend verhindert wird, was zu verringerten Packungsdichten und damit schlechterer Ausrichtbarkeit führt. Ein weiterer Nachteil der genannten Polyurethane ist, dass die erforderliche Elastizität häufig mit einer zu geringen Härte und einer Tendenz zur Oberflächenklebrigkeit einhergeht. Es ist daher Stand der Technik, entsprechende Polyurethane mit anderen Bindemitteln zu kombinieren. Beispielsweise wird in der DE-AS 1 269 661 eine Abmischung von Polyurethanen mit Polyestern beschrieben. In der Praxis werden die genannten Nachteile jedoch nicht ausreichend vermieden. Andere vorgeschlagene Bindemittel-Kombinationen sind z.B. Mischungen aus Polyurethanen mit Phenoxyharzen laut DE-AS 1 295 011, mit Vinylidenchlorid-Acrylnitril-Copolymerisaten entsprechend DE-AS 2 037 605 oder mit Polycarbonaten nach DE-OS 2 114 611. Kombinationen von Polyurethanharzen mit Vinylchlorid-Vinylacetat-Copolymerisaten entsprechend DE-AS 1 282 700 oder Kombinationen von Polyurethanelastomeren mit Copolymerisaten aus Vinylchlorid und Acrylsäureestern, wie z.B. in der DE-OS 2 255 802 oder DE-OS 2 234 822 beschrieben, weisen gute Pigmentdispergierfähigkeit auf und ergeben Schichten mit guter Packungsdichte. Diese weisen jedoch mit feinteiligen Pigmenten, wie z.B. Magnetiten oder Eisenpulvern, nicht die erforderliche Abriebfestigkeit auf.

Es hat sich nun gezeigt, dass die beschriebenen und zum Teil bisher bewährten Bindemittel-Kombinationen die steigenden Qualitätsanforderungen bezüglich der Schichteigenschaften oft nicht mehr erfüllen, wenn sehr feinteilige und/oder relativ weiche Pigmente, wie z.B. stark aciculare Eisenoxide, Magnetite oder metallisches Eisen bzw. Metall-Legierungen eingesetzt werden, so dass mechanische Schwierigkeiten, insbesondere verstärkter Abrieb, resultiert.

Aufgabe der vorliegenden Erfindung ist es daher, magnetische Speichermedien, bestehend aus unmagnetischen Schichtträgern und Magnetbeschichtungen zu schaffen, welche auch mit feinteiligen und/oder mechanisch empfindlichen Pigmenten hohe Pigmentpackungsdichten und überlegene mechanische Eigenschaften aufweisen.

Diese Aufgabe wird erfindungsgemäss dadurch gelöst, dass als Bindemittel spezielle Polyesterurethane eingesetzt werden und zwar 25-100% von reaktiven Endgruppen praktisch freie, thermoplastische Polyurethane, erhalten durch Umsetzung

a) eines linearen Polyesters aus mindestens einer Dicarbonsäure mit 2-8 C-Atomen und/oder Hydroxycarbonsäure mit 4-6 C-Atomen und mindestens einem Glykol mit 2-12 C-Atomen und mit einem Molekulargewicht zwischen 1200 und 6000,

b) mit mindestens einem Diisocyanat und

c) einer Mischung von mindestens zwei Glykolen mit 2-20 C-Atomen, wobei der Molenbruch der Einzelkomponenten 0,8 nicht übersteigt.

Es hat sich nicht nur ergeben, dass mit Polyurethanen entsprechend der Erfindung, überraschend günstige mechanische Schichteigenschaften bezüglich Abriebfestigkeit und geringem Wickelkleben erzielt werden, sondern es wurde als weiterer unerwartet günstiger Effekt gefunden, dass die beschriebenen Polyurethane sehr gute Dispergiereigenschaften für Pigmente aufweisen. Dadurch können höhere Pigment-Packungsdichten erreicht werden. Darüber hinaus ermöglicht die gute Dispergierfähigkeit den Einsatz der erfindungsgemässen Polyurethane auch als alleinige Bindemittel, so dass die Bandbreite möglicher Rezeptur-Kombinationen zur Abstimmung der gewünschten Schichteigenschaften wesentlich erweitert wird.

Wenngleich die Zusammenhänge zwischen den mechanischen Eigenschaften der reinen Bindemittel und den resultierenden Eigenschaften der Magnetschichten im einzelnen noch nicht geklärt sind, wird angenommen, dass die günstigen Eigenschaften der beanspruchten Polyurethane auf der Kombination von relativ hoher Härte bei grosser Elastizität und zugleich sehr gutem Pigmentbindevermögen beruhren.

Die Polyurethane können nach an sich bekannten Verfahren hergestellt werden und sind teilweise in der DE-OS 2 402 799 beschrieben. Als lineare Polyester mit einem Molekulargewicht von 1200-6000 kommen Umsetzungsprodukte von aliphatischen Dicarbonsäuren, wie Bernstein-, Glutar-, Adipin-, Azelain-, Pimelin-, und Korksäure, und aromatischen Dicarbonsäuren, wie Terephthal-, Isophthal-, Phthalsäure und Mischungen dieser Säuren, und/oder Hydroxycarbonsäuren wie $\epsilon$-Hydroxycapronsäure, insbesondere aber Adipinsäure mit zweiwertigen Alkoholen, wie Ethylenglykol, Propylenglykol- (1,2) und (1,3), Butylenglykol- (1,4) und (2,3) Neopentylglykol, Hexandiol- (1,6), 1,4-Dimethylolcyclohexan, Trimethylhexandiol- (1,6) und Dodecandiol- (1,12) in Frage. Als einzusetzende Ausgangskomponenten für die Herstellung der Polyurethane kommen Diisocyanate, wie 1,6-Hexamethylendiisocyanat, 4,4'-Diphenylmethandiisocyanat, Toluylendiisocyanat, Xylylendiisocyanat, 4,4'-Diisocyanato-dicyclohexylmethan in Betracht. Die nieder-molekularen Diol-Komponenten, die als Kettenverlängerer-Komponenten dienen, sind Glykole, wie Ethylenglykol, Propylenglykol -(1,2) und -(1,3) Butandiol -(1,4), Pentandiol -(1,5) Neopentylglykol, Hexandiol- (1,6), 1,4-Dimethylolcyclohexan, Trimethylhexandiol -(1,6), Dodecandiol -(1,12), Bis-(2-Hydroxyethyl-ether) von Hydrochinon, Bisphenol A oder hydrierten Bisphenol A. Als Kettenverlängerung wird ein Gemisch der genannten Diole, insbesondere eine Mischung aus Ethylenglykol und Butandiol -1,4, eingesetzt und zwar in einem molaren Mengenverhältnis von 20 : 80 bis 80 : 20. Die erfindungsgemäss verwendeten Polyurethane sind im wesentlichen frei von reaktiven Endgruppen und werden im allgemeinen bei einem NCO/OH-Verhältnis von 0,95-1,05, vorzugsweise 0,97-1,01, hergestellt. Geeignete Polyurethane haben eine Härte von 80-100 Shore A, eine Zugfestigkeit von 30-75 MPa und eine Bruchdehnung über 300, insbesondere von 320-520%.

Obwohl prinzipiell die erfindungsgemässen Polyurethane als alleinige Bindemittel einsetzbar sind und Magnetschichten mit hoher Packungsdichte und sehr guter mechanischer Stabilität ergeben, ist die Erfindung nicht darauf beschränkt. So kann es für die Optimierung der vielfältigen Parameter günstig sein, die Polyurethane auch mit anderen Bindemitteln zu kombinieren. Ebenso stehen natürlich alle weiteren Möglichkeiten zur Abstimmung der Schichteigenschaften offen, z.B. die Zugabe von Additiven wie Gleitmitteln, Weichmachern, Schleifmitteln und anderen, sowie gegebenenfalls die Vernetzung der Schichten mit Isocyanaten oder Melaminharzen.

Die Magnetschichten werden in bekannter Weise erzeugt, durch Dispergierung des magnetischen Materials in Lösungen der beanspruchten Polyurethan-Bindemittel, gegebenenfalls mit Zusätzen, und durch Aufbringen einer Schicht dieser Dispersion auf einen unmagnetischen Schichtträger:

Als Lösungsmittel können alle zur Lösung von Polyurethanen gebräuchlichen Flüssigkeiten verwendet werden, sofern ihre Lösefähigkeit ausreicht. Beispiele sind Dimethylformamid, Dioxan, Tetrahydrofuran, Cyclohexan und andere, gegebenenfalls auch in Kombination miteinander oder mit anderen, wie z.B. Methyl-Ethyl-Keton, Toluol, Methyl-Isobutylketon.

Als magnetisierbares Material kommen alle für Speicherzwecke geeigneten ferromagnetischen Stoffe in Betracht. Beispiele sind $\gamma$-Eisenoxide, Magnetite, Mischphasen aus Magnetit und $\gamma$-Eisenoxiden, Co-dotierte Eisenoxide, Ferrite, $CrO_2$, metallische Pigmente wie Reineisen oder ferromagnetische Metall-Legierungen.

In der Regel wird man zur Herstellung der Magnetdispersion Dispergierhilfsmittel einsetzen, die in jedem Fall auf das vorgelegte Pigment, das Lösemittel und die übrigen Rezepturbestandteile sowie die Eigenschaften der fertigen Schicht abgestimmmt sein müssen. Die Auswahl erfolgt aus der Vielzahl bekannter oberflächenaktivier Verbindungen, wie z.B. Lecithin, Cephalin, Fettsäureamine oder -diamine bzw. deren Ammoniumsalze, ethoxylierte Fettsäurederivate, aliphatische oder aromatische gegebenenfalls ethoxylierte Phosphorsäureester, Sulfobernsteinsäureester, Sorbitan-Ester, aliphatische oder aromatische Sulfonsäuren oder Sulfonate, Fettalkoholsulfate und andere mehr.

Zusätzlich zu den erfindungsgemäss verwendeten Polyurethan-Bindemitteln können, falls zur Erzielung bestimmter Schichteigenschaften erforderlich, andere Polymere oder Harze als Kombinationspartner eingesetzt werden, wie z.B. Polyvinylchlorid, Vinylchlorid-Vinylacetat-Copolymere, Polyvinylidenchlorid, Copolymere aus Vinylchlorid mit Acrylaten oder Methacrylaten, Polyvinylacetale wie Polyvinylformal oder Polyvinylbutyral, Polyacrylate, Epoxidharze, Polyester.

Besonders wichtig kann in bestimmten Fällen die Vernetzung der Magnetschichten mit reaktiven Verbindungen sein. Bevorzugt werden dazu aliphatische oder aromatische, polyfunktionelle Isocyanate oder auch Melaminharze.

Weitere Rezepturbestandteile können je nach den gewünschten Eigenschaften der Dispersion oder der fertigen Schicht Verwendung finden. In Frage kommen vor allem Gleitmittel wie z.B. Fettsäuren oder Fettsäurederivate, Silikonöle, Paraffine, Wachse, fluorierte Öle, Dispersionen von Polytetrafluorethylen. Mögliche andere Zusätze sind beispielsweise Weichmacher, Schleifmittel, viskositätsregulierende Stoffe u.a.

Die Herstellung der Beschichtungsdispersion erfolgt in bekannter Weise durch Vermischen des magnetischen Materials mit einem geeigneten Lösemittel durch Kneter, Rührer, Dissolver, oder mittels anderer Mischaggregate. Das Lösemittel kann das gelöste Bindemittel ganz oder nur Teile davon enthalten, ebenso Dispergatoren oder andere Additive. Die vorgemischte Dispersion wird üblicherweise bis zur ausreichenden Verteilung des magnetischen Pigments einem Mahlprozess unterworfen. Die Mahlung erfolgt z.B. in Kugelmühlen, Perlmühlen, Sandmühlen o.ä. Gegebenenfalls werden restliche Bindemittelanteile oder Additive nach Beendigung des Mahlvorgangs zugemischt. Die anschliessende Beschichtung des unmagnetischen Trägermaterials mit der Magnetdispersion erfolgt entsprechend dem Stand der Technik mittels Reverse-Roll-Coater, Rasterdruck-, Extrudergiesser. Als Schichtträger können Folien aus Polyester, wie Polyethylenterephthalat, Polyolefine, wie Polypropylen, Cellulosederivate wie -triacetat, Polycarbonate oder starre Schichtträger aus nicht magnetischen Metallen wie Al, oder keramische Materialien eingesetzt werden. Die weitere Bearbeitung der beschichteten Materialien, wie die Oberflächenglättung durch Kalanderung, das Schneiden und Konfektionieren, erfolgt in bekannter Weise.

Nachfolgend wird die Erfindung anhand von Beispielen näher erläutert:

*Beispiel 1*

Zur Herstellung der Magnetbeschichtungsdispersion wird eine Mischung aus folgenden Komponenten hergestellt:

| | |
|---|---|
| Magnetit mit einer BET-Oberfläche von 26 m²/g | 80 Gew.-Teile |
| Dodecylbenzol-Sulfonsäure | 2,5 Gew.-Teile |
| Alkoxyphosphorsäureester | 4,0 Gew.-Teile |
| Polyesterurethan aus einem Mischpolyester aus Ethylenglykol/Butandiol -1,4 mit einem Molekulargewicht von 2000, aus Butandiol -1,4 und Hexandiol -1,6 (molares Mengenverhältnis 1 : 1) und 4,4'-Diphenylmethandiisocyanat | 14,7 Gew.-Teile |
| techn. Stearinsäure | 0,4 Gew.-Teile |
| Tetrahydrofuran | 135,0 Gew.-Teile |
| Cyclohexanon | 50,0 Gew.-Teile |

Die Mischung wird in einem Disperser vordispergiert und in einer Rührwerkskugelmühle 3,5 Std. gemahlen. Nach Filtrieren wird der Beschichtungslack mit einer Schichtdicke von 5 μm auf eine Polyesterfolie von 12 μm Stärke vergossen und kalandriert. Aus dem Metall werden Bänder mit 3,81 mm Breite geschnitten und in CC konfektioniert.

*Vergleichsbeispiel A*

Die Magnetbandbeschichtung wird hergestellt wie in Beispiel 1 beschrieben, jedoch mit dem alleinigen Unterschied, dass statt des erfindungsgemäss verwendeten Polyurethans ein Polyester-Polyurethan entsprechend DE-AS 1 106 959 eingesetzt wird.

*Vergleichsbeispiel B*

Man stellt eine Magnetbeschichtungsdispersion her wie in Beispiel 1, mit dem Unterschied, dass anstelle des erfindungsgemäss verwendeten Polyurethans ein Polyether-Polyurethan gemäss US-Patentschrift 2 899 411 eingesetzt wird.

*Beispiel 2*

Es wird eine Magnetbeschichtungsdispersion hergestellt aus

| | |
|---|---|
| Magnetit | 80,0 Gew.-Teile |
| Lecithin | 3,5 Gew.-Teile |
| Polyesterurethan aus einem Mischpolyester aus Ethylenglykol/Butandiol -1,4 mit einem Molekulargewicht von 2000, aus Butandiol -1,4 und Hexandiol -1,6 (molares Mengenverhältnis 70 : 30) und 4,4'-Diphenylmethandiisocyanat | 14,7 Gew.-Teile |
| techn. Stearinsäure | 0,4 Gew.-Teile |
| Tetrahydrofuran | 135,0 Gew.-Teile |
| Cyclohexanon | 150,0 Gew.-Teile |

Die Mischung wird wie in Beispiel 1 zu einem Magnetband verarbeitet.

*Vergleichsbeispiel C*

Die Magnetbeschichtungsmasse wird hergestellt wie in Beispiel 2 mit dem einzigen Unterschied, dass anstelle des erfindungsgemäss verwendeten Polyurethans ein Polyester-Polyurethan entsprechend DE-AS 1 106 959 eingesetzt wird.

*Beispiel 3*

Es wird eine Magnetbeschichtungsdispersion hergestellt aus

| | |
|---|---|
| Magnetit | 180,0 Gew.-Teile |
| Dodecylbenzol-Sulfonsäure | 3,0 Gew.-Teile |
| Alkoxyphosphorsäureester | 3,0 Gew.-Teile |
| hydroxylgruppenhaltiges Copolymerisat aus Vinylchlorid und Vinylacetat | 11,0 Gew.-Teile |
| Polyesterurethan aus einem Mischpolyester aus Ethylenglykol/Butandiol -1,4 mit einem Molekulargewicht von 2000, aus Ethylenglykol und Butandiol -1,4 (molares Mengenverhältnis 1 : 1) und 4,4'-Diphenylmethandiisocyanat | 22,0 Gew.-Teile |
| techn. Stearinsäure | 0,9 Gew.-Teile |
| Tetrahydrofuran | 280,0 Gew.-Teile |
| Cyclohexanon | 100,0 Gew.-Teile |

Die Verarbeitung der Dispersion und die Herstellung des Magnetbandes erfolgt wie in Beispiel 1.

*Vergleichsbeispiel D*

Die Magnetbeschichtungsdispersion wird hergestellt wie in Beispiel 3 mit dem alleinigen Unterschied, dass anstelle des erfindungsgemäss verwendeten Polyurethans ein Polyester-Polyurethan gemäss DE-AS 1 106 959 eingesetzt wird.

*Beispiel 4*

Die zu prüfende Magnetbeschichtungsdispersion wird hergestellt aus

| | |
|---|---|
| Magnetit | 180,0 Gew.-Teile |
| Lecithin | 7,5 Gew.-Teile |
| hydroxylgruppenhaltiges Mischpolymerisat aus Vinylchlorid und Vinylacetat | 11,0 Gew.-Teile |

Polyurethan gemäss Beispiel 3    22,0 Gew.-Teile

techn. Stearinsäure    0,9 Gew.-Teile

Tetrahydrofuran    280,0 Gew.-Teile

Cyclohexanon    100,0 Gew.-Teile

Nach Vordispergierung mit einem Dissolver wird der Ansatz in einer Perl-Mühle im Umlauf gemahlen. Bei einem Durchsatz des Mahlvolumens in 1 Std. beträgt die Mahldauer 20 Std. Die Weiterverarbeitung des Lackes erfolgt wie in Beispiel 1.

*Vergleichsbeispiel E*

Man verfährt bei der Herstellung der Magnetbeschichtung wie in Beispiel 4, ersetzt jedoch das erfindungsgemäss verwendete Polyurethan durch ein Polyurethan entsprechend DE-AS 1 106 959.

*Beispiel 5*

Man stellt eine Magnetbeschichtungsdispersion her, aus

Magnetit    89,0 Gew.-Teile

Lecithin    4,0 Gew.-Teile

hydroxylgruppenhaltiges Mischpolymerisat aus Vinylchlorid und Vinylacetat    5,4 Gew.-Teile

Polyurethan gemäss Beispiel 3    1,6 Gew.-Teile

techn. Stearinsäure    0,5 Gew.-Teile

Tetrahydrofuran    140,0 Gew.-Teile

Cyclohexanon    50,0 Gew.-Teile

Die Verarbeitung entspricht Beispiel 4.

*Vergleichsbeispiel F*

Die Herstellung der Beschichtungsdispersion erfolgt wie in Beispiel 5, jedoch mit dem Unterschied, dass anstelle des Polyurethans der Erfindung ein Polyester-Polyurethan entsprechend DE-AS 1 106 959 eingesetzt wird.

*Beispiel 6*

Man stellt eine Magnetbeschichtungsdispersion her, aus

Magnetit    180,0 Gew.-Teile

Dodecylbenzol-Sulfonsäure    3,0 Gew.-Teile

Alkoxyphosphorsäureester    3,0 Gew.-Teile

Polyvinylformal    13,5 Gew.-Teile

Polyurethan gemäss Beispiel 3    19,5 Gew.-Teile

techn. Stearinsäure    0,9 Gew.-Teile

Tetrahydrofuran    280,0 Gew.-Teile

Cyclohexanon    100,0 Gew.-Teile

Die Bandherstellung erfolgt wie in Beispiel 1.

*Vergleichsbeispiel G*

Man verfährt wie in Beispiel 6, verwendet jedoch anstelle des Polyurethans der Erfindung ein Polyester-Polyurethan nach DE-AS 1 106 959.

*Vergleichsbeispiel H*

Man prüft eine Beschichtungsdispersion entsprechend Beispiel 6, jedoch unter Einsatz eines Polyether-Polyurethans wie in US-PS 2 899 411 beschrieben.

*Beispiel 7*

Man verfährt bei der Herstellung einer Magnetdispersion wie in Beispiel 4, jedoch wird anstelle des OH-gruppenhaltigen Copolymerisats aus Vinylchlorid und Vinylacetat ein Copolymerisat aus Vinylchlorid und Hydroxypropylacrylat eingesetzt.

*Vergleichsbeispiel K*

Man verfährt wie in Beispiel 7, verwendet jedoch anstelle des Polyurethans der Erfindung ein Polyester-Polyurethan gemäss DE-AS 1 106 959.

*Beispiel 8*

Für eine magnetische Beschichtungsdispersion werden verarbeitet

Magnetit mit einer BET-Oberfläche von 32 $m^2/g$    75,0 Gew.-Teile

Dodecylbenzol-Sulfonsäure    2,2 Gew.-Teile

Polyvinylformal    2,8 Gew.-Teile

Polyurethan gemäss Beispiel 3    13,7 Gew.-Teile

techn. Stearinsäure    0,5 Gew.-Teile

Tetrahydrofuran    145,0 Gew.-Teile

Cyclohexanon    25,0 Gew.-Teile

Die Mahlung und Bandherstellung erfolgen wie in Beispiel 4.

*Vergleichsbeispiel L*

Man stellt einen Beschichtungslack her wie in Beispiel 8, mit dem alleinigen Unterschied, dass anstelle des erfindungsgemäss verwendeten Polyurethans ein Polyester-Polyurethan nach US-PS 2 899 411 eingesetzt wird.

Die Magnetspeichermaterialien werden nach folgenden Kriterien beurteilt:

a) am unkalanderten Band:
— Pigmentpackungsvolumen

$$PPV = \frac{\text{Volumen Pigment}}{\text{Volumen Schicht}}$$

b) am kalanderten Band:
— Verhältnis von remanenter Magnetisierung zur Magnetisierung bei 1000 Oe Feldstärke ($M_R/M_{1000}$)

— Verhältnis der remanenten Magnetisierung in Längs- und Querrichtung des Bandes

$$(OR = \frac{M_R =}{M_R})$$ nach vorgehender Magnetisierung bei 4000 Oe.

— Oberflächenbeschaffenheit durch Beurteilung in Mikroskop (Differential-Interferenz-Kontrast)

— Abriebfestigkeit bei Gebrauch: Nach Konfektionierung der Prüfbänder in Kompaktkassetten wird ein Lauftest auf einem handelsüblichen CC-Rekorder durchgeführt. Nach 14 Durchläufen werden das Band und Bandführungsteile auf abgeriebenes Magnetmaterial geprüft.

Die Ergebnisse sind in der nachstehenden Tabelle zusammengefasst.

| Beispiel | Packungsdichte % | $M_R/M_{1000}$ | OR | Oberfläche | Abriebfestigkeit |
|---|---|---|---|---|---|
| 1 | 48 | 0,84 | 2,0 | sehr gut | sehr gut |
| Vergleich A | 44 | 0,82 | 1,9 | leicht rauh | mittel |
| Vergleich B | 46 | 0,83 | 1,9 | rauh | gut |
| 2 | 42 | 0,81 | 1,9 | sehr gut | gut |
| Vergleich C | 39 | 0,80 | 1,9 | leicht rauh | mittel |
| 3 | 45 | 0,84 | 2,1 | sehr gut | sehr gut |
| Vergleich D | 44 | 0,82 | 2,0 | gut | gut |
| 4 | 44 | 0,84 | 2,2 | sehr gut | sehr gut |
| Vergleich E | 42 | 0,82 | 2,0 | gut | gut |
| 5 | 35,5 | 0,80 | 2,9 | sehr gut | ausgezeichnet |
| Vergleich F [1] | — | 0,77 [2] | — | — | — |
| 6 | 42 | 0,83 | 2,0 | sehr gut | sehr gut |
| Vergleich G | 41 | 0,81 | 1,9 | leicht rauh | mittel |
| Vergleich H | 39 | 0,82 | 1,9 | rauh | mittel |
| 7 | 41 | 0,82 | 2,0 | sehr gut | sehr gut |
| Vergleich K | 41 | 0,81 | 1,9 | gut | mittel |
| 8 | 43 | 0,79 | 2,0 | sehr gut | sehr gut |
| Vergleich L | 41 | 0,77 | 1,9 | gut | mittel |

[1] Lack wurde wegen zu schlechter Dispersionsqualität nicht verarbeitet

[2] Prüfung an Handabstrich

**Patentansprüche**

1. Magnetisches Speichermedium bestehend aus einem unmagnetischen Schichtträger und mindestens einer darauf befindlichen magnetisierbaren Schicht, die feinteilige Magnetpigmente und Polyurethane als Bindemittel enthält, dadurch gekennzeichnet, dass das Bindemittel aus 25-100% eines von reaktiven Endgruppen praktisch freien, thermoplastischen Polyurethans, hergestellt durch Umsetzung
   a) eines linearen Polyesters aus mindestens einer Dicarbonsäure mit 2-8 C-Atomen und/oder Hydroxycarbonsäure mit 4-6 C-Atomen und mindestens einem Glykol mit 2-12 C-Atomen, wobei das Molekulargewicht des Polyesters zwischen 1200 und 6000 beträgt,
   b) mindestens eines Diisocyanats und
   c) einer Mischung von mindestens zwei Glykolen mit 2-20 C-Atomen, wobei der Molenbruch der Einzelkomponenten 0,8 nicht überschreitet,
besteht.

2. Magnetisches Speichermedium nach Anspruch 1, dadurch gekennzeichnet, dass das thermoplastische Polyurethan eine Härte von 80-100 Shore A, eine Zugfestigkeit von 30-75 MPa und eine Bruchdehnung von 320-520% aufweist.

3. Magnetisches Speichermedium nach Anspruch 1 und 2, dadurch gekennzeichnet, dass das Polyurethan hergestellt ist durch Umsetzung eines Mischpolyesters aus Ethylenglykol/Butandiol und Adipinsäure mit einem Molekulargewicht von 2000, 4,4'-Diphenylmethandiisocyanat und einer Mischung von Butandiol -1,4 und Hexandiol -1,6 in einem molaren Mengenverhältnis von 3 : 2 — 2 : 3.

4. Magnetisches Speichermedium nach Anspruch 1 und 2, dadurch gekennzeichnet, dass das Polyurethan hergestellt ist durch Umsetzung eines Mischpolyesters aus Ethylenglykol/Butandiol und Adipinsäure mit einem Molekulargewicht von 2000, 4,4'-Diphenylmethandiisocyanat und einer Mischung von Ethylenglykol und Butandiol -1,4 in einem molaren Mengenverhältnis von 3 : 2 — 2 : 3.

5. Magnetisches Speichermedium nach Anspruch 1 und 2, dadurch gekennzeichnet, dass das Polyurethan hergestellt ist durch Umsetzung eines Polyester aus Butandiol -1,4 und Adipinsäure mit einem Molekulargewicht von 2000, 4,4'-Diphenylmethandiisocyanat, einer Mischung von Butandiol -1,4 und Hexandiol -1,6 in einem molaren Mengenverhältnis von 70 : 30.

6. Magnetisches Speichermedium nach Anspruch 1 bis 5, dadurch gekennzeichnet, dass als zusätzliches Bindemittel ein Polyvinyl-Acetal eingesetzt ist.

7. Magnetisches Speichermedium nach Anspruch 1 bis 5, dadurch gekennzeichnet, dass als zusätzliches Bindemittel ein Polyvinyl-Formal eingesetzt ist.

8. Magnetisches Speichermedium nach Anspruch 1 bis 5, dadurch gekennzeichnet, dass als zusätzliches Bindemittel ein Polyvinyl-Butyral eingesetzt ist.

9. Magnetisches Speichermedium nach Anspruch 1 bis 5, dadurch gekennzeichnet, dass als zusätzliches Bindemittel hydroxylgruppenhaltiges Copolymerisat aus Vinylacetat und Vinylchlorid eingesetzt ist.

10. Magnetisches Speichermedium nach Anspruch 1 bis 5, dadurch gekennzeichnet, dass als zusätzliches Bindemittel ein Copolymerisat von Vinylchlorid und Hydroxypropylacrylat oder -methacrylat eingesetzt ist.

## Claims

1. A magnetic storage medium consisting of a nonmagnetic layer support and, applied thereto, at least one magnetisable layer containing finely particulate magnetic pigments and polyurethanes as binder, characterised in that the binder consists of from 25 to 100% of a thermoplastic polyurethane substantially free from reactive terminal groups obtained by reacting:
   a) a linear polyester of at least one dicarboxylic acid containing from 2 to 8 carbon atoms and/or hydroxy carboxylic acid containing from 4 to 6 carbon atoms and at least one glycol containing from 2 to 12 carbon atoms, the molecular weight of the polyester being from 1200 to 6000, with
   b) at least one diisocyanate, and
   c) a mixture of at least two glycols containing from 2 to 20 carbon atoms,
   the molar fraction of the individual components not exceeding 0.8.

2. A magnetic storage medium as claimed in Claim 1, characterised in that the thermoplastic polyurethane has a hardness of from 80 to 100 Shore A, a tensile strength of from 30 to 75 MPa and a breaking elongation of from 320 to 520%.

3. A magnetic storage medium as claimed in Claims 1 and 2, characterised in that the polyurethane is obtained by reacting a copolyester of ethylene glycol/butane diol and adipic acid having a molecular weight of 2000, 4,4'-diphenyl methane diisocyanate and a mixture of 1,4-butane diol and 1,6-hexane diol in a molar ratio of from 3 : 2 to 2 : 3.

4. A magnetic storage medium as claimed in Claims 1 and 2, characterised in that the polyurethane is obtained by reacting a copolyester of ethylene glycol/butane diol and adipic acid having a molecular weight of 2000, 4,4'-diphenyl methane diisocyanate and a mixture of ethylene glycol and 1,4-butane diol in a molar ratio of from 3 : 2 to 2 : 3.

5. A magnetic storage medium as claimed in Claims 1 and 2, characterised in that the polyurethane is obtained be reacting a polyester of 1,4-butane diol and adipic acid having a molecular weight of 2000, 4,4'-diphenyl methane diisocyanate and a mixture of 1,4-butane diol and 1,6-hexane diol in a molar ratio of 70 : 30.

6. A magnetic storage medium as claimed in Claims 1 to 5, characterised in that a polyvinyl acetal is used as additional binder.

7. A magnetic storage medium as claimed in Claims 1 to 5, characterised in that a polyvinyl formal is used as additional binder.

8. A magnetic storage medium as claimed in Claims 1 to 5, characterised in that a polyvinyl butyral is used as additional binder.

9. A magnetic storage medium as claimed in Claims 1 to 5, characterised in that a hydroxyl-containing copolymer of vinyl acetate and vinyl chloride is used as additional binder.

10. A magnetic storage medium as claimed in Claims 1 to 5, characterised in that a copolymer of vinyl chloride and hydroxy propyl acrylate or methacrylate is used as additional binder.

## Revendications

1. Support d'enregistrement magnétique composé d'un support de couche non magnétique et d'au moins une couche magnétisable se trouvant sur celui-ci, qui contient des pigments magnétiques finement divisés et des polyuréthannes comme liant, caractérisé en ce que le liant est formé de 25 à 100% d'un polyuréthanne thermoplastique pratiquement dépourvu de groupes terminaux réactifs, préparé par réaction
   a) d'un polyester linéaire d'au moins un acide dicarboxylique ayant 2 à 8 atomes de carbone et/ou un acide hydrocycarboxylique ayant 4 à 6 atomes de carbone et d'au moins un glycol ayant 2 à 12 atomes de carbone, le poids moléculaire du polyester étant compris entre 1200 et 6000,
   b) d'au moins un diisocyanate
   c) d'un mélange d'au moins deux glycols ayant 2 à 20 atomes de carbone, la fraction molaire des composants individuels ne dépassant pas 0,8.

2. Support d'enregistrement magnétique suivant la revendication 1, caractérisé en ce que le polyuréthanne thermoplastique a une dureté Shore A de 80 à 100, une résistance à la traction de 30 à 75 MPa et un allongement à la rupture de 320 à 520%.

3. Support d'enregistrement magnétique suivant les revendications 1 et 2, caractérisé en ce que le polyuréthanne est produit par réaction d'un copolyester d'éthylène-glycol/butanediol et d'acide adipique ayant un poids moléculaire de 2000, de 4,4'-diisocyanatodiphénylméthane et d'un mélange de butanediol-1,4 et d'hexanediol-1,6 dans un rapport quantitatif molaire de 3 : 2 à 2 : 3.

4. Support d'enregistrement magnétique suivant les revendications 1 et 2, caractérisé en ce que le polyuréthanne est produit par réaction d'un copolyester d'éthylène-glycol/butanediol et d'acide adipique ayant un poids moléculaire de 2000, de 4,4'-diisocyanatodiphénylméthane et d'un mélange d'éthylène-glycol et de butanediol-1,4 dans un rapport quantitatif molaire de 3 : 2 à 2 : 3.

5. Support d'enregistrement magnétique suivant les revendications 1 et 2, caractérisé en ce que le polyuréthanne est produit par réaction d'un polyester de butanediol-1,4 et d'acide adipique ayant un poids moléculaire de 2000, de 4,4'-diisocyanatodiphénylméthane, d'un mélange de butanediol-1,4 et d'hexanediol-1,6 dans un rapport quantitatif molaire de 70 : 30.

6. Support d'enregistrement magnétique suivant les revendications 1 à 5, caractérisé en ce qu'on utilise comme liant additionnel un polyvinylacétal.

7. Support d'enregistrement magnétique suivant les revendications 1 à 5, caractérisé en ce qu'on utilise comme liant additionnel un polyvinylformal.

8. Support d'enregistrement magnétique suivant les revendications 1 à 5, caractérisé en ce qu'on utilise comme liant additionnel un polyvinylbutyral.

9. Support d'enregistrement magnétique suivant les revendications 1 à 5, caractérisé en ce qu'on utilise comme liant additionnel un copolymère porteur de groupes hydroxyle d'acétate de vinyle et de chlorure de vinyle.

10. Support d'enregistrement magnétique suivant les revendications 1 à 5, caractérisé en ce qu'on utilise comme liant additionnel un copolymère de chlorure de vinyle et d'acrylate ou de méthacrylate d'hydroxypropyle.